(19) Europäisches Patentamt
European Patent Office
Office européen des brevets

(11) EP 1 241 198 B1

(12) EUROPÄISCHE PATENTSCHRIFT

(45) Veröffentlichungstag und Bekanntmachung des Hinweises auf die Patenterteilung:
**09.11.2005 Patentblatt 2005/45**

(51) Int Cl.[7]: **C08G 18/28**, C08G 18/48, C08G 18/50, C08G 18/71, C08G 18/75, C09D 175/08

(21) Anmeldenummer: **02004255.2**

(22) Anmeldetag: **27.02.2002**

(54) **Polyurethane und ihre Verwendung zur Verdickung wässriger Systeme**

Polyurethanes and their use as thickeners in aqueous systems

Polyuréthanes et leur utilisation comme épaississants de systèmes aqueux

(84) Benannte Vertragsstaaten:
**AT BE CH CY DE DK ES FI FR GB GR IE IT LI LU MC NL PT SE TR**

(30) Priorität: **12.03.2001 DE 10111792**

(43) Veröffentlichungstag der Anmeldung:
**18.09.2002 Patentblatt 2002/38**

(73) Patentinhaber:
- **BAYER AG**
  **51368 Leverkusen (DE)**
- **Borchers GmbH**
  **40789 Monheim (DE)**

(72) Erfinder:
- **Wamprecht, Christian, Dr.**
  **41472 Neuss (DE)**
- **Mazanek, Jan, Dr.**
  **51061 Köln (DE)**
- **Manshausen, Peter, Dr.**
  **50767 Köln (DE)**
- **Sauer, Frank, Dr.**
  **40767 Langenfeld (DE)**

(56) Entgegenhaltungen:
**EP-A- 0 905 157**
**US-A- 4 155 892**
**US-A- 5 281 654**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft neue, als Verdickungsmittel für wässrige Systeme geeignete hydrophil/hydrophobe wasserlösliche oder wasserdispergierbare Polyurethane, die sich durch eine besonders effiziente Verdickungswirkung im high-shear-Bereich auszeichnen, sowie ihre Verwendung zur Verdickung wässriger Systeme.

Verdickungsmittel auf Polyurethanbasis für wässrige Systeme werden in zahlreichen Veröffentlichungen beschrieben (vgl. z. B. DE-A 1 444 243, DE-A 3 630 319, EP-A 0 031 777, EP-A 0 307 775, EP-A 0 495 373, US-A 4 079 028, US-A 4 155 892, US-A 4 499 233 oder US-A 5 023 309).

Diesen Verdickungsmitteln des Standes der Technik gemeinsam ist das gleichzeitige Vorliegen von (i) hydrophilen Segmenten in einer Menge von mindestens 50 Gew.-%, (ii) hydrophoben Segmenten in einer Menge von maximal 10 Gew.-% und (iii) Urethangruppen. Unter "hydrophilen Segmenten" sind hierbei insbesondere Polyetherketten mit mindestens 5 Kettengliedern zu verstehen, deren AlkylenoxidEinheiten zumindest zu 60 Mol-% aus Ethylenoxideinheiten bestehen. Unter "hydrophoben Segmenten" sind hierbei insbesondere Kohlenwasserstoff-Segmente mit mindestens 6 Kohlenstoffatomen zu verstehen, die innerhalb der Kette, und/oder vorzugsweise endständig eingebaut sind.

Auch die nachstehend beschriebenen erfindungsgemäßen Verdickungsmittel entsprechen vorzugsweise dieser Definition.

Diese Polyurethanverdicker eignen sich als Hilfsmittel für die Einstellung von rheologischen Eigenschaften von wässrigen Systemen wie z. B. Auto- und Industrielacken, Putz- und Anstrichfarben, Druck- und Textilfarben, Pigmentdruckpasten, pharmazeutischen, kosmetischen Zubereitungen, Pflanzenschutzformulieren oder Füllstoffdispersionen.

Obwohl die bekannten Polyurethanverdicker eine breite Anwendung finden, weisen sie für viele Anwendungsbereiche eine nicht ausreichende Wirksamkeit auf. Ein besonderes Problem beim Einsatz von Polyurethanverdickern liegt darin, dass sie nicht nur eine gute Wirkung im Bereich von niedrigen Schergeschwindigkeiten (was vor allem für das Absetzverhalten und den Verlauf von z. B. Farben wichtig ist) zeigen müssen, sondern auch bei hohen Schergeschwindigkeiten (high-shear-Bereich), die beim Auftragen der Zubereitungen z. B. mit Pinsel oder Rolle oder aber beim Verspritzen auftreten. Aus diesem Grunde werden nach dem Stand der Technik in der Regel zwei Grundtypen von Verdickern für den jeweiligen Bereich der Schwergeschwindigkeiten in einer Zubereitung eingesetzt oder aber weitere Hilfsstoffe zugesetzt, wie z. B. Lösemittel zum Herabsetzen der low-shear-Viskosität. Gerade diese oft angewandte Maßnahme führt aber zur Erhöhung von flüchtigen bzw. migrationfahigen Anteilen in der Lackformulierung, was insbesondere aus Umweltschutzgründen bedenklich ist.

In der Vergangenheit wurden viele Versuche unternommen, um die Wirksamkeit der wässrigen Polyurethanverdicker zu verbessern, wie z. B. durch den Einbau von hydrophoben Segmenten in die Polymerkette des Verdickers oder durch den Einsatz von hydrophoben Seitenketten. Die steigenden Anforderungen im Markt führten jedoch in den letzten Jahren zum Wunsch nach noch weiter verbesserten Produkten. Durch den Einsatz von gegenüber dem Stand der Technik verbesserten Verdickungsmitteln würden entweder bei gleicher Dosierung Lacke mit verbesserten Streicheigenschaften erhalten werden oder aber man könnte die gleichen Streicheigenschaften durch eine geringere Dosierung erzielen, was zu wirtschaftlichen Vorteilen gegenüber den alten Systemen führen würde.

Die der Erfindung zugrundeliegende Aufgabe bestand daher darin, neue Verdickungsmittel auf Polyurethanbasis für wässrige bzw. überwiegend wässrige Systeme zur Verfügung zu stellen, die eine verbesserte Wirksamkeit in high-shear-Bereich aufweisen.

Diese Aufgabe konnte mit der Bereitstellung der nachstehend näher beschriebenen erfindungsgemäßen hydrophil/hydrophoben wasserlöslichen oder -dispergierbaren Polyurethane gelöst werden. Erfindungswesentlich ist hierbei der gezielte Einbau ausgewählter hydrophiler bzw. hydrophober Segmente durch Verwendung von speziellen Alkoholen bzw. speziellen Alkoholgemischen sowie der Einsatz von speziellen Polyethern als Reaktionspartner für die Isocyanatkomponente.

Gegenstand der Erfindung sind wasserlösliche oder wasserdispergierbare Polyurethane, erhalten in ein- oder mehrstufiger Umsetzung, unter Einhaltung eines NCO/OH-Äquivalentverhältnisses von 0,5:1 bis 1,2:1, die Umsetzungsprodukte aus

A) einem Gemisch aus mindestens einem Polyetherpolyol a1) der mittleren Funktionalität ≥ 3 und mindestens einem urethangruppenhaltigen Polyetherpolyol a2) der mittleren Funktionalität ≥ 4,

B) mindestens einem Monoalkohol mit 6 bis 22 Kohlenstoffatomen,

C) mindestens einem (cyclo)aliphatischen und/oder aromatischen Diisocyanat,

D) gegebenenfalls mindestens einem Monoisocyanat mit 4 bis 18 Kohlenstoffatomen und

E) gegebenenfalls mindestens einem Polyisocyanat einer mittleren Funktionalität >2.

darstellen.

Gegenstand der Erfindung ist auch ein Verfahren zur Herstellung der wasserlöslichen oder wasserdispergierbaren Polyurethane, dadurch gekennzeichnet, dass diese in ein- oder mehrstufiger Umsetzung unter Einhaltung eines NCO/OH-Äquivalentverhältnisses von 0,5:1 bis 1,2:1 aus

A) einem Gemisch aus mindestens einem Polyetherpolyol a1) der mittleren Funktionalität ≥ 3 und mindestens einem urethangruppenhaltigen Polyetherpolyol a2) der mittleren Funktionalität ≥ 4,

B) mindestens einem Monoalkohol mit 6 bis 22 Kohlenstoffatomen,

C) mindestens einem (cyclo)aliphatischen und/oder aromatischen Diisocyanat,

D) gegebenenfalls mindestens einem Monoisocyanat mit 4 bis 18 Kohlenstoffatomen und

E) gegebenenfalls mindestens einem Polyisocyanat einer mittleren Funktionalität >2.

hergestellt werden.

In einer erfindungsgemäßen Verfahrensvariante kann das urethangruppenhaltige Polyetherpolyol a2) durch teilweise Umsetzung des Polyetherpolyols a1) mit Polyisocyanaten einer mittleren Funktionalität ≥ 2 hergestellt werden.

Gegenstand der Erfindung ist auch die Verwendung dieser erfindungsgemäßen Polyurethane zur Verdickung wässriger Systeme.

Die Polyetherpolyolkomponente A besteht aus mindestens einem Gemisch aus einem Polyetherpolyol a1) der Formel (I)

$$R_1\left[-O-(A)_x-H\right]_y \qquad (I),$$

wobei

$R_1$ für einen aliphatischen oder araliphatischen, gegebenenfalls Ethersauerstoffatome aufweisenden Kohlenwasserstoffrest mit 4 bis 36 Kohlenstoffatomen steht,

A für Ethylenoxid- und/oder Propylenoxid-Reste mit der Maßgabe, dass mindestens 50 Mol-%, vorzugsweise 70 Mol-% und besonders bevorzugt 100 Mol-%, der Reste für Ethylenoxidreste stehen,

x für eine Zahl von 30 bis 250 steht und

y eine Zahl von 3 bis 18, bevorzugt 3 bis 6, bedeutet

und einen urethangruppenhaltigen Polyetherpolyol a2) der Formel (II)

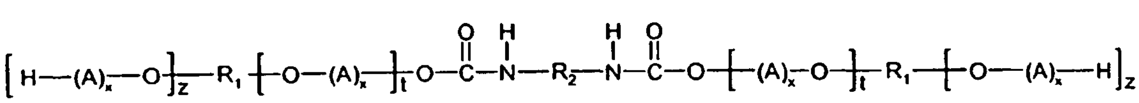

(II),

wobei

$R_1$ für einen aliphatischen oder araliphatischen, gegebenenfalls Ethersauerstoffatome aufweisenden Kohlenwasserstoffrest mit 4 bis 36 Kohlenstoffatomen steht,

$R_2$ für einen aliphatischen, araliphatischen, cycloaliphatischen oder aromatischen Rest mit 4 bis 12 Kohlenstoffatomen steht,

A für Ethylenoxid- und/oder Propylenoxid-Reste mit der Maßgabe, dass mindestens 50 Mol-%, vorzugsweise 70 Mol-% und besonders bevorzugt 100 Mol-%, der Reste für Ethylenoxidreste stehen,

x für eine Zahl von 30 bis 250 steht und

z eine Zahl von 2 bis 16, bevorzugt 2 oder 4 bedeutet und
für t gilt: t = (y - z).

Die Monoalkoholkomponente B) besteht aus mindestens einem einwertigen Alkohol der Formel (III)

$$R_3\text{-OH} \qquad (III),$$

worin

$R_3$ für einen gegebenenfalls inerte Substituenten aufweisenden aliphatischen, cycloaliphatischen, aromatischen oder araliphatischen Kohlenwasserstoffrest mit 4 bis 18 bevorzugt 6 bis 12 Kohlenstoffatomen steht.

Die Komponente C) besteht aus mindestens einem Diisocyanat der allgemeinen Formel (IV)

$$\text{OCN-}R_4\text{-NCO} \qquad (IV),$$

worin

$R_4$ für einen gegebenenfalls inerte Substituenten aufweisenden aliphatischen, araliphatischen, cycloaliphatischen oder aromatischen Rest mit 4 bis 22 Kohlenstoffatomen steht.

Die Komponente D) besteht aus mindestens einem Monoisocyanat der allgemeinen Formel (V)

$$R_3\text{-NCO} \qquad (V),$$

worin

$R_3$ die bei Formel (III) genannte Bedeutung hat.

Die Komponente E) besteht aus mindestens einem aliphatischen, araliphatischen, cycloaliphatischen, heterocyclischen oder aromatischen Polyisocyanat mit einer Funktionalität von >2.

Die Herstellung der dem Gemisch der Polyetheralkohole A) zugrundeliegenden Basispolyether a1) erfolgt in an sich bekannter Weise durch Alkoxylierung von entsprechenden mehrwertigen Alkoholen der Formel (VI)

$$R_1\text{-}[\text{OH}]_y \qquad (VI)$$

wobei

$R_1$ und y die bei Formel (I) genannten Bedeutungen haben,

unter Verwendung von Ethylenoxid und gegebenenfalls Propylenoxid im Gemisch und/oder beliebiger Reihenfolge. Geeignete Starter sind beispielsweise Glycerin, Trimethylolpropan, Trimethylolethan, Pentaerythrit, Di-Trimethylolpropan, Sorbit, Zucker usw. Bevorzugt werden Glycerin, Trimethylolpropan und Sorbit eingesetzt, besonders bevorzugt

werden Glycerin und Sorbit eingesetzt.

Die Herstellung des Polyetheralkoholgemsichcs A), bestehend aus den Polyethern a1) und den urethangruppenhaltigen Polyethern a2), erfolgt durch teilweise Umsetzung der Polyether a1) mit mindestens einem organischen Isocyanat der Funktionalität ≥ 2. Dabei können bis zu 50 Mol-%, vorzugsweise bis zu 20 Mol-% und besonders bevorzugt bis zu 10 Mol-% der Polyether a1) mit Isocyanaten umgesetzt werden. Die Umsetzung erfolgt in einem Temperaturbereich von 0 bis 180°C, vorzugsweise 20 bis 160°C und besonders bevorzugt 60 bis 120°C.

Beispiele für die Monoalkoholkomponenten B) sind aliphatische Alkohole wie z. B. 1-Butanol, 1-Pentanol, 1-Hexanol, 1-Heptanol, 1-Octanol, 2-Ethylhexanol, 1-Nonanol, 1-Decanol, 1-Dodecanol, Stearylalkohol usw. Bevorzugt sind Monalkohole mit 6 bis 16 Kohlenstoffatomen, besonders bevorzugt sind Monoalkohole mit 8 bis 14 Kohlenstoffatomen.

Beispiele für Diisocyanate der Komponenten C) sind aliphatische Diisocyanate wie z. B. 1,4-Butandiisocyanat oder 1,6-Hexandiisocyanat; cycloaliphatische Diisocyanate wie z. B. 1-Isoeyanato-3,3,5-trimethyl-5-isocyanatomethylcyclohexan (Isophorondiisocyanat), 1,3- und 1,4-Cyclohexandiisocyanat, 4,4'-Diisocyanatodicyclohexylmethan usw. sowie aromatische Diisocyanate wie z. B. 2,4-Diisocyanatotoluol und 4,4'-Diisocyanatodiphenylmethan.

Beispiele für die Monoisocyanatkomponente D) sind aliphatische Monoisocyanate wie z. B. 1-Butylisocyanat, 1-Pentylisocyanat, 1-Hexyllsocyanat, 1-Heptylisocyanat, 1-Octyllsocyanat, 1-Nonylisocyanat, 1-Decylisocyanat, 1-Dodecylisocyanat, Stearylisocyanat usw. Bevorzugt sind Isocyanate mit 8 bis 18 Kohlenstoffatomen, besonders bevorzugt sind Monoisocyanate mit 10 bis 18 Kohlenstoffatomen.

Beispiele für die Polyisocyanatkomponente E) sind marktübliche Lackpolyisocyanate, das heißt vor allen die bekannten Urethangruppen, Uretdiongruppen, Allophanatgruppen und insbesondere Biuretgruppen, Isocyanuratgruppen und Iminooxadiazindiongruppen aufweisenden Modifizierungsprodukte von einfachen Diisocyanaten, wie z. B. 1,6-Diisocyanatohexan, 1-Isoeyanatcyanato-3,3,5-trimethyl-5-Isocyanatomethylcyclohexan (Isophorondiisocyanat), 4,4'-Diisocyanatodicyclohexylmethan, 1,4-Diisocyanatocyclohexan, 1-Methyl-2,4-diisocyanatocyclohexan und seine Gemische mit bis zu 35 Gew.-%, bezogen auf Gesamtgemisch, an 1-Methyl-2,6-diisocyanatocyclohexan; 2,4-Diisocyanatotoluol und seine Gemische mit bis zu 35 Gew.-%, bezogen auf Gesamtgemisch, an 2,6-Diisocyanatotoluol oder deren Gemische. Besonders bevorzugt werden die entsprechenden "Lackpolyisocyanate" mit aliphatisch und/ oder cycloaliphatisch gebundenen, freien Isocyanatgruppen eingesetzt. Ein geeignetes Polyisocyanat, das nicht die oben aufgeführten Gruppierungen enthält, ist 4-Isocyanatomethyl-1,8-octandiisocyanat.

Zu den Urethangruppen aufweisenden "Lackpolyisocyanten" gehören z. B. die Umsetzungsprodukte von 2,4- und gegebenenfalls 2,6-Diisocyanatotoluol oder 1-Methyl-2,4- und gegebenenfalls 1-Methyl-2,6-diisocyanatocyclohecan mit unterschüssigen Mengen an Trimethylolpropan, bzw. dessen Gemischen mit einfachen Diolen, wie z. B. den isomeren Propan- oder Butandiolen. Die Herstellung derartiger Urethangruppen aufweisender Lackpolyisocyanate in praktisch monomerfreier Form ist beispielsweise in der DE-PS 1 090 196 beschrieben.

Zu den Biuretgruppen aufweisenden Lackpolyisocyanaten, die bei der erfindungsgemäßen Verwendung besonders bevorzugt sind, gehören insbesondere jene auf Basis von 1,6-Diisocyanatohexan, deren Herstellung beispielsweise in EP-A 0 003 505, DE-A 1 101 394, US-A 3 358 010 oder US-A 3 903 127 beschrieben ist.

Ebenfalls zu den besonders bevorzugten, Isocyanuratgruppen aufweisenden, Lackpolyisocyanaten gehören insbesondere die Trimerisate bzw. Mischtrimerisate der oben beispielhaft genannten Diisocyanate, wie z. B. die Isocyanuratgruppen aufweisenden Polyisocyanate auf Basis Diisocyanatotoluol gemäß GB-A 1 060 430, GB-A 1 506 373 oder GB-A 1 485 564, die Mischtrimerisate von Diisocyanatotoluol mit 1,6-Diisocyanatohexan, die beispielsweise gemäß DE-A 1 644 809 oder DE-A 3 144 672 zugänglich sind, und insbesondere die aliphatischen, die aliphatisch-cycloaliphatischen und die cycloaliphatischen Trimerisate bzw. Mischtrimerisate auf Basis von 1,6-Diisocyanatohexan und/oder Isophorndiisocyanat, die beispielsweise gemäß US-A 4 324 879, US-A 4 288 586, DE-A 3 100 262, DE-A 3 100 263, DE-A 3 033 860 oder DE-A 3 144 672 erhältlich sind. Die bei der erfindungsgemäßen Verwendung zum Einsatz gelangenden Lackpolyisocyanate weisen im allgemeinen einen Isocyanatgehalt von 5 bis 25 Gew.-%, eine mittlere NCO-Funktionalität von 2,1 bis 5,0, vorzugsweise 2,8 bis 4,0 und einen Restgehalt an, zu ihrer Herstellung eingesetzten, monomeren Diisocyanaten von unter 2 Gew.-%, vorzugsweise unter 0,5 Gew.-% auf. Selbstverständlich können auch beliebige Gemische der beispielhaft genannten Lackpolyisocyanate zum Einsatz gelangen.

Die Herstellung der erfindungsgemäßen Polyurethane erfolgt ein- oder mehrstufig. Unter einer einstufigen Reaktion ist hierbei die Umsetzung der Gesamtmenge der Komponente a1) mit der Gesamtmenge der Komponenten B), C), gegebenenfalls D) und gegebenenfalls E) zu verstehen. Dabei entsteht gemäß der gewählten Einsatzmenge der Komponente C) die Komponente A) in situ. Eine mehrstufige Reaktion besteht beispielsweise in der Umsetzung eines Teils der Komponenten a1) mit einem Teil der Komponente C) und anschließende Umsetzung der entstandenen Komponente A) mit den Komponenten B), dem Rest der Komponente C) sowie gegebenenfalls den Komponenten D) und E). Eine mehrstufige Reaktion kann auch bzw. zusätzlich aus einer separaten Umsetzung eines Teils oder der Gesamtmenge der Monoalkoholkomponenten B) mit einem molaren Überschuss an Diisocyanatkomponenten C) und anschließende Umsetzung des dabei resultierenden NCO-Prepolymeren mit der zuvor hergestellten Komponente A) und gegebenenfalls den Komponenten D) und E) bestehen. Die Reihenfolge der Umsetzungen ist hierbei weitgehend

ohne Bedeutung, es muss durch die Auswahl der Einatzmengen der Komponenten A bis C) und gegebenenfalls D) und E) nur gewährleistet sein, dass die Komponente A) gemäß der gemachten Definition entstchen kann.

Bei den auf diese Weise hergestellten erfindungsgemäßen Polyurethanen handelt es sich im allgemeinen um farblose bis gelbliche Wachse bzw. hochviskose Polymere mit Erweichungspunkten bzw. -bereichen innerhalb des Temperaturbereichs von 10 bis 80°C. Für den späteren Einsatz ist es oftmals vorteilhaft, die erfindungsgemäßen Polyurethane mit Zusätzen, wie z. B. Formulierungsmitteln, Lösungsmitteln, Wasser, Emulgatoren oder Stabilisatoren zu flüssigen Formulierungen zu vermischen.

Die erfindungsgemäßen Polyurethane eignen sich zur Verdickung von wässrigen bzw. überwiegend wässrigen Systemen wie Farben-, Leder- und Papierhilfsmittel, Zubereitungen für die Erdölförderung, Zubereitungen von Waschmitteln, Klebstoffen, Wachsen für Polituren, Formulierungen für pharmazeutische und veterinäre Zwecke, Pflanzenschutzzubereitungen, kosmetische Artikel usw. Auch das Wasser selbst kann mit den erfindungsgemäßen Polyurethanverdickern angedickt werden, um dann gegebenenfalls mit weiteren Zusätzen versetzt zu werden oder selbst zu wässrigen Zubereitungen zugesetzt zu werden. Die erfindungsgemäßen Verdicker können auch in Gemischen mit anderen Verdickungsmitteln eingesetzt werden wie z. B. solchen auf Basis von Polyacrylaten, Cellulosederivaten oder anorganischen Verdickungsmitteln.

Beispiele für wässrige Systeme, die erfindungsgemäß verdickt werden können, sind wässrige Polyacrylatdispersionen, wässrige Dispersionen von Mischpolymerisaten olefinisch ungesättigter Monomerer, wässrige Polyvinylacetatdispersionen, wässrige Polyurethandispersionen, wässrige Polyesterdispersionen und insbesondere gebrauchsfertige Zubereitungen der oben bereits angesprochenen Art auf Basis derartiger Dispersionen oder Mischungen derartiger Dispersionen.

Die erfindungsgemäßen Verdickungsmittel können selbstverständlich in Substanz, vorzugsweise als Granulat oder gegebenenfalls Pulver, eingesetzt werden. Bevorzugte Verwendung finden jedoch flüssige Formulierungen, die neben den erfindungsgemäßen Polyurethanen Wasser, Lösungsmittel wie Butyldiglykol, Isopropanol, Methoxypropylacetat, Ethylen- und/oder Propylenglykol, nichtionische Emulgatoren, Tenside und/oder gegebenenfalls weitere Zusatzstoffe enthalten, weil dadurch die Einarbeitung der erfindungsgemäßen Verdickungsmittel in wässrige bzw. überwiegend wässrige Systeme wesentlich erleichtert wird.

Die gebrauchsfertigen Zubereitungen der erfindungsgemäßen Verdickungsmittel stellen besonders bevorzugt wässrige Lösungen oder Dispersionen mit einem Feststoffgehalt von 10 bis 80, vorzugsweise 30 bis 60 und besonders bevorzugt 40 bis 50 Gew.-% dar.

Die Menge an erfindungsgemäßen Verdickungsmitteln, die den wässrigen bzw. überwiegend wässrigen Systemen zum Erreichen der gewünschten Verdickung zugesetzt wird, hängt vom jeweiligen Verwendungszweck ab und kann vom Fachmann in wenigen Versuchen ermittelt werden. In der Regel werden 0,05 bis 10 Gew.-%, bevorzugt 0,1 bis 4 Gew.-%, besonders bevorzugt 0,1 bis 2 Gew.-% des erfindungsgemäßen Verdickungsmittels eingesetzt, wobei sich diese Prozentangaben auf den Feststoff des Verdickungsmittel einerseits und den Feststoffgehalt des zu verdikkenden wässrigen Systems andererseits beziehen.

Die Beurteilung der Wirksamkeit der erfindungsgemäßen Verdickungsmittel kann nach bekannten Methoden erfolgen, z. B. im Haake-Rotationsviskosimeter, im Stormer- oder Brookfield-Viskosimeter oder im ICI-Viskosimeter.

## Beispiele

### Eingesetzte Rohstoffe

**Polyether $a_1$:**

**I** Polyether auf Basis Glycerin und einem Gemisch aus Ethylenoxid und Propylenoxid (Verhältnis 75:25) und einer OH-Zahl von ca. 18 mg KOH/g

**II** Polyether auf Basis Sorbit und einem Gemisch aus Ethylenoxid und Propylenoxid (Verhältnis 93,2 : 6,8) und einer OH-Zahl von ca. 18 mg KOH/g

DBTL: Dibutylzinndilaurat

Herstellung der erfindungsgemäßen Polyurethane

**Beispiel 1**

**Eintopfreaktion**

915 g (0,3 Mol OH-Gruppen) Polyether I wurden unter Stickstoff in einem 2-1-Glaskolben eingewogen und bei 1 mbar/125°C innerhalb von 5 Stunden von Spuren Wasser befreit. Nach Abkühlen auf 80°C wurden 14,26 g 1-Octanol (0,11 Mol OH-Gruppen) und 22,1 g 1-Decanol (0,14 Mol OH-Gruppen) zugegeben und 15 Minuten gerührt. Danach wurden bei 80°C 55,5 g Isophorondiisocyanat (0,50 Mol Isocyanatgruppen) und 0,09 g DBTL zugegeben und anschließend bei 80°C so lange gerührt, bis IR-spektroskopisch keine Isocyanatbande mehr nachzuweisen war. Es resultierte ein hochviskoses, schwach gelblich gefärbtes Polyurethanharz.

**Beispiel 2**

**Zweistufenverfahren**

915 g (0,3 Mol OH-Gruppen) Polyether I wurden unter Stickstoff in einem 2-1-Glaskolben eingewogen und bei 1 mbar/125°C innerhalb von 5 Stunden von Spuren Wasser befreit. Nach Abkühlen auf 120°C wurden 1,11 g Isophorondiisocyanat zugegeben (0,01 Mol Isocyanatgruppen) und so lange bei 120°C gerührt bis IR-spektroskopisch keine Isocyanatbande mehr nachzuweisen war. Nach Abkühlen auf 80°C wurden 14,26 g 1-Octanol (0,11 Mol OH-Gruppen) und 22,1 g 1-Decanol (0,14 Mol OH-Gruppen) zugegeben und 15 Minuten gerührt. Danach wurden bei 80°C 54,39 g Isophorondiisocyanat (0,49 Mol Isocyanatgruppen) und 0,09 g DBTL zugegeben und anschließend bei 80°C so lange gerührt, bis IR-spektroskopisch keine Isocyanatbande mehr nachzuweisen war. Es resultierte ein hochviskoses, schwach gelblich gefärbtes Polyurethanharz.

Analog Beispiel 1 wurden die in der folgenden Tabelle 1 aufgelisteten Polyurethanverdicker hergestellt und nach beendeter Reaktion zu 60 %igen Lösungen in Wasser, [1)] Levalin FD® und [1)] Emulgator WN® (Verhältnis 3 : 2 : 1) aufgelöst. Im Falle der Verwendung von Monoisocyanaten wird der eingesetzte Polyether zuerst vollständig mit dem Monoisocyanat umgesetzt, danach erfolgt erst die Reaktion mit den Alkoholen und dem Diisocyanat.

Analog Beispiel 2 wurden die in der folgenden Tabelle 2 aufgelisteten Polyurethanverdicker hergestellt und nach beendeter Reaktion zu 60 %igen Lösungen in Wasser, [1)] Levalin FD® und [1)] Emulgator WN® (Verhältnis 3 : 2 : 1) aufgelöst.

Die angegebenen Vale geben nicht die tatsächlich eingesetzten Val-Mengen wider, sondern geben das Val-Verhältnis der eingesetzten Reaktionspartner an.

Tabelle 1:

| **Polyurethanverdicker gemäß Beispiel 1** | | | | | |
|---|---|---|---|---|---|
| **Beispiel** | **Polyether (Val)** | **Diisocyanat (Val)** | **Monoisocyanat (Val)** | **Monoalkohol (Val)** | **Katalysator** |
| 3 | I (3,0) | IPDI (5,0) | - | 1-Dodecanol (2,5) | |
| 4 | I (3,0) | IPDI (5,0) | - | 1-Decanol (2,5) | DBTL |
| 5 | I (3,0) | IPDI (5,0) | - | 1-Dodecanol (0,5)<br>1-Decanol (2,0) | DBTL |
| 6 | I (3,0) | IPDI (5,0) | - | 1-Decanol (1,67)<br>2-Ethylhexanol (0,83) | DBTL |
| 7 | I (3,0) | IPDI (5,0) | - | 1-Decanol (1,25)<br>1-Octanol (1,25) | DBTL |
| 8 | I(3,0) | IPDI (5,0) | - | 1-Octanol (2,5) | DBTL |
| 9 | I (3,0) | IPDI (2,5) | Stearylisocyanat (1,25) | 1-Decanol (0,7)<br>1-Octanol (0,55) | DBTL |

[1)] Handelsprodukte der Bayer AG

Tabelle 1: (fortgesetzt)

| Polyurethanverdicker gemäß Beispiel 1 | | | | | |
|---|---|---|---|---|---|
| **Beispiel** | **Polyether (Val)** | **Diisocyanat (Val)** | **Monoisocyanat (Val)** | **Monoalkohol (Val)** | **Kataly-sator** |
| 10 | II (6,0) | IPDI (3,5) | Stearylisocyanat (2,0) | 1-Dodecanol (2,0) | DBTL |
| 11 | II (6,0) | IPDI (2,0) | Dodecylisocyanat (3,0) | 1-Octanol (1,0) | DBTL |
| 12 | II (6,0) | IPDI (2,0) | Dodecylisocyanat (4,0) | 1-Decanot (1,0) | DBTL |
| 13 | II (6,0) | IPDI (3,0) | Dodecylisocyanat (3,0) | 1-Dodecanol (2,0) | DBTL |

Tabelle 2:

| Polyurethanverdicker gemäß Beispiel 2 | | | | |
|---|---|---|---|---|
| **Beispiel** | **Polyether (Val)** | **Diisocyanat (Val 1 / Val 2)** | **Monoalkohol (Val)** | **Katalysator** |
| 14 | I (2,9) | IPDI (0, 1 / 4,9) | 1-Decanol (1,4)<br>1-Octanol (1,1) | DBTL |
| 15 | I (2,9) | IPDI (0,3 / 5,0) | 1-Decanol (1,4)<br>1-Octanol (1,1) | DBTL |
| 16 | I (2,9) | IPDI (0,1 / 5,25) | 1-Decanol (1,4)<br>1-Octanol (1,1) | DBTL |
| 17 | I (2,9) | IPDI (0,3 / 5,25) | 1-Decanol (1,4)<br>1-Octanol (1,1) | DBTL |
| 18 | I (3,0) | IPDI (0,1 / 5,0) | 1-Decanol (1,4)<br>1-Octanol (1,1) | DBTL |
| 19 | I (2,9) | IPDI (0,5 / 5,15) | 1-Decanol (1,4)<br>1-Octanol (1,1) | DBTL |
| 20 | I (2,9) | IPDI (0,65 / 5,0) | 1-Decanol (1,4)<br>1-Octanol (1,1) | DBTL |

**Vergleichsbeispiel 1**

**1) Herstellung eines Prepolymeren aus Isophorondiisocyanat und 1-Dodecanol**

1110 g Isophorondiisocyanat (10 Val) wurden in einem 2-I-Dreihalskolbcn mit Rührer, Rückflusskühler und Troptirichter unter Stickstoffatmosphäre vorgelegt und unter Rühren auf 100°C erhitzt. Dann wurden innerhalb von 60 Minuten 186 g (1 Val) 1-Dodecanol zugetropft. Anschließend wurde noch 2 Stunden bei 100°C gerührt. Danach wurde das resultierende Produkt einer Dünnschichtdestillation unterzogen (170°C, 0,25 mbar) und dabei das überschüssige Isophorondiisocyanat vollständig entfernt. Es resultierte ein farbloses viskoses Harz mit einem Isocyanatgehalt von 10,8 %.

**2. Herstellung eines Polyurethanverdickers mit Hilfe eines Prepolymeren**

Beispiel 3 wurde nachgestellt, jedoch wurde der Polyether I statt mit IPDI/Dodecanol mit dem oben beschriebenen Prepolymeren umgesetzt. Es resultierte ein schwach gelb gefärbtes Harz, das 60 %ig in Wasser, Levalin FD®,

Emulgator WN® (3 : 2 : 1) gelöst wurde.

**Anwendungsbeispiele**

Die nachfolgenden Beispiele zeigen, dass mit den erfindungsgemäßen Verdickungsmitteln Dispersionsfarben erhalten werden können, die verbesserte Streicheigenschaften ("Streichbremse") zeigen.

**Herstellung der Anstrichfarbe und Prüfung der Streicheigenschaften**

In einer 1000-ml-Flasche werden mit 100 Glasperlen (Ø 3 mm) folgende Bestandteile im Skandex 30 Min. dispergiert:

| | |
|---|---|
| AMP (Aminopropanol) [1] | 1,25 g |
| Borchigen ND (25 %ig in $H_2O$) [2] | 6,8 g |
| Entschäumer Neocryl AP 2860 (20 %ig) [3] | 1,6 g |
| Verdicker (50 %ig) | 10,0 g |
| $TiO_2$ RHD-2 (Fa. Tioxide) | 112,5 g |
| Methoxybutanol | 8,5 g |
| Propylenglykol | 8,5 g |
| Butyldiglykol | 8,5 g |
| $H_2O$ | 22,35 g |
| Danach wird nach Zugabe von | |
| $H_2O$ | 50,0 g |
| Neocryl XK 62 (42 %ig) [4] | 270,0 g |
| | **500,0 g** |

[1] (2-Amino-2-methylpropanol-1, 90 %ig in Wasser), Angus Chemie GmbH, Essen
[2] Netzmittel, Borchers GmbH, Monheim
[3] Entschäumer, ICI Resins, Runcorn, England
[4] anionische Dispersion auf Basis Acrylat/Styrol, ICI Resins

weitere 30 Min. dispergiert. Die Farbe wird von den Glasperlen befreit und nach einer Reifezeit von ca. 12 Std. mit einem Pinsel auf Kunststofffolie (Linetta-Folie) aufgestrichen. Die Qualität des Aufstriches (Streicheigenschaften) werden mit einer Skala von I (sehr gut) bis X (sehr schlecht) beurteilt ("Streichbremse" in Tabellen 3 bis 5).

Die Viskositätsmcssungen wurden im low-shear-Bereich bei 10,3 $s^{-1}$ mit Haake-Viskosimeter VT 500 (Messkörper SV DIN), im high-shear-Bereich bei 10000 $s^{-1}$ mit dem Viskosimeter Physika Rheolab MC1 gemessen.

Tabelle 3:

| **Anwendungstechnische Prüfung der Produkte aus Tabelle 1** | | | |
|---|---|---|---|
| **Beispiel Nr.** | **Viskosität (mPa-s) bei $s^{-1}$** | | **Streicheigenschaften** |
| | **10,3** | **10000** | |
| 3 | 7300 | 170 | IV-V |
| | 16500[a)] | 200 | V |
| 4 | 2500 | 280 | III |
| 5 | 3900 | 170 | V |
| 6 | 1500 | 240 | III |
| 7 | 1600 | 260 | III |
| 8 | 400 | 160 | III - IV |
| 9 | 8500 | 200 | IV |

[a)] Dosierung 1,0 % bez. auf Lack

Tabelle 3: (fortgesetzt)

| Anwendungstechnische Prüfung der Produkte aus Tabelle 1 | | | |
|---|---|---|---|
| **Beispiel Nr.** | **Viskosität (mPa-s) bei $s^{-1}$** | | **Streicheigenschaften** |
| | **10,3** | **10000** | |
| 10 | 28000 | 150 | VI |
| 11 | 5800 | 170 | V |
| 12 | 6300 | 190 | IV |
| 13 | 27600 | I60 | VI |
| Als Vergleich: | | | |
| Bermodol® 2110 [b] | 450 | 110 | VII |
| Acrysol® 2020 [c] | 350 | 100 | VII |
| Vergleichsbeispiel 1 | 9200 | 130 | VII |

[b] AKZO
[c] Rohm & Haas Co.

Tabelle 4:

| Anwendungstechnische Prüfung der Produkte aus Tabelle 2 | | | |
|---|---|---|---|
| **Verdicker aus Beispiel Nr.** | **Viskosität (mPa·s) bei $s^{-1}$** | | **Streicheigenschaften** |
| | **10,3** | **10000** | |
| 14 | 950 | 220 | III |
| 15 | 1500 | 200 | III |
| 16 | 1500 | 300 | III |
| 17 | 1700 | 300 | III |
| 18 | 900 | 240 | III - IV |
| 19 | 2100 | 260 | III - IV |
| 20 | 2500 | 280 | III - IV |
| Als Vergleich: | | | |
| Bermodol® 2110 | 450 | 110 | VII |
| Acrysol® 2020 | 350 | 100 | VII |
| Vergleichsbeispiel 1 | 9200 | 130 | VII |

Tabelle 5 zeigt den Einsatz der erfindungsgemäßen Verdickungsmittel in Kombination mit Cellulosederivaten (Walocel® XM 20000 PV; Borchers GmbH, Monheim).

Tabelle 5:

| Anwendungstechnische Prüfung | | | | |
|---|---|---|---|---|
| **Produkt aus Beispiel Nr.** | **Verhältnis PUR-Verdicker/ Cellulose (Gew.-%, bez. auf Lack)** | **Viskosität (mPa·s) bei $s^{-1}$** | | **Streicheigenschaften** |
| | | **10,3** | **10000** | |
| 16 | 0,25:0,25 | 3100 | 120 | VI |
| 16 | 0,25 : 0,40 | 7100 | 150 | V |

Tabelle 5: (fortgesetzt)

| Anwendungstechnische Prüfung | | | | |
|---|---|---|---|---|
| **Produkt aus Beispiel Nr.** | **Verhältnis PUR-Verdicker/ Cellulose (Gew.-%, bez. auf Lack)** | **Viskosität (mPa·s) bei $s^{-1}$** | | **Streicheigenschaften** |
| | | **10,3** | **10000** | |
| 16 | 0,80:0,40 | 7400 | 210 | IV |
| 6 | 0,50:0,40 | 8300 | 200 | IV |
| 7 | 0,50:0,40 | 7500 | 190 | IV |
| Als Vergleich Bermodol® 2110 | 0,50 : 0,40 | 7200 | 150 | VI |

## Fazit

Aus den Prüfergebnissen der Tabellen 3 bis 5 geht deutlich hervor, dass die erfindungsgemäßen Polyurethanverdicker im high-shear-Bereich stets und im low-shear-Bereich meist eine bessere Verdickungswirkung aufweisen als die Vergleichsprodukte. Die Streicheigenschaften der Lacke mit den erfindungsgemäßen Polyurethanverdickern sind durchweg besser als die Streicheigenschaften der Lacke mit den Vergleichsprodukten.

## Patentansprüche

**1.** Wasserlösliche oder wasserdispergierbare Polyurethane, erhalten in ein- oder mehrstufiger Umsetzung, unter Einhaltung eines NCO/OH-Äquivalentverhältnisses von 0,5 : 1 bis 1,2 : 1 als Umsetzungsprodukte aus

A) einem Gemisch aus mindestens einem Polyetherpolyol a1) der mittleren Funktionalität ≥ 3 und mindestens einem urethangruppenhaltigen Polyetherpolyol a2) der mittleren Funktionalität ≥ 4,
B) mindestens einem Monoalkohol mit 6 bis 22 Kohlenstoffatomen,
C) mindestens einem (cyclo)aliphatischen und/oder aromatischen Diisocyanat,
D) gegebenenfalls mindestens einem Monoisocyanat mit 4 bis 18 Kohlenstoffatomen und
E) gegebenenfalls mindestens einem Polyisocyanat einer mittleren Funktionalität > 2

darstellen.

**2.** Polyurethane gemäß Anspruch 1, **dadurch gekennzeichnet, dass** das Polyetherpolyol a1) eine mittlere Funktionalität von 3 hat.

**3.** Polyurethane gemäß Anspruch 1, **dadurch gekennzeichnet, dass** das Polyetherpolyol a1) eine mittlere Funktionalität von 4 bis 6 hat.

**4.** Polyurethane gemäß Anspruch 1, **dadurch gekennzeichnet, dass** der Monoalkohol B) 8 bis 18 Kohlenstoffatome hat.

**5.** Polyurethane gemäß den Ansprüchen 1 bis 5, **dadurch gekennzeichnet, dass** das Diisocyanat C) ein (cyclo) aliphatisches Diisocyanat ist.

**6.** Polyurethane gemäß den Ansprüchen 1 bis 6, **dadurch gekennzeichnet, dass** das Monoisocyanat D) 8 bis 14 Kohlenstoffatome hat.

**7.** Verfahren zur Herstellung der wasserlöslichen oder wasserdispergierbaren Polyurethane gemäss Anspruch 1, **dadurch gekennzeichnet, dass** diese in ein- oder mehrstufiger Umsetzung unter Einhaltung eines NCO/OH-Äquivalentverhältnisses von 0,5:1 bis 1,2:1 aus

A) einem Gemisch aus mindestens einem Polyetherpolyol a1) der mittleren Funktionalität ≥ 3 und mindestens

einem urethangruppenhaltigen Polyetherpolyol a2) der mittleren Funktionalität ≥ 4,

B) mindestens einem Monoalkohol mit 6 bis 22 Kohlenstoffatomen,

C) mindestens einem (cyclo)aliphatischen und/oder aromatischen Diisocyanat,

D) gegebenenfalls mindestens einem Monoisocyanat mit 4 bis 18 Kohlenstoffatomen und

E) gegebenenfalls mindestens einem Polyisocyanat einer mittleren Funktionalität >2.

hergestellt werden.

8. Verfahren zur Herstellung von Polyurethanen gemäß Anspruch 1, **dadurch gekennzeichnet, dass** das urethangruppenhaltige Polyetherpolyol a2) durch teilweise Umsetzung des Polyetherpolyols a1) mit einem Diisocyanat hergestellt wird.

9. Verfahren zur Herstellung von Polyurethanen gemäß Anspruch 8, **dadurch gekennzeichnet, dass** das urethangruppenhaltige Polyetherpolyol a2) durch teilweise Umsetzung des Polyetherpolyols a1) mit Polyisocyanaten einer mittleren Funktionalität ≥ 2 hergestellt wird.

10. Verwendung der Polyurethane gemäß Anspruch 1, zur Einstellung der Fließeigenschaften von wässrigen Lacksystemen, Klebstoffen und anderen wässrigen Formulierungen.

## Claims

1. Water-soluble or water-dispersible polyurethanes obtained in a one-stage or multi-stage reaction, while maintaining an NCO/OH equivalent ratio of 0.5:1 to 1.2:1, constituting reaction products of

A) a mixture of at least one polyether polyol a1) having a mean functionality of ≥ 3 and at least one urethane group-containing polyether polyol a2) having a mean functionality of ≥ 4,
B) at least one monoalcohol with 6 to 22 carbon atoms,
C) at least one (cyclo)aliphatic and/or aromatic diisocyanate,
D) optionally at least one monoisocyanate with 4 to 18 carbon atoms, and
E) optionally at least one polyisocyanate having a mean functionality of > 2.

2. Polyurethanes according to claim 1, **characterised in that** the polyether polyol a1) has a mean functionality of 3.

3. Polyurethanes according to claim 1, **characterised in that** the polyether polyol a1) has a mean functionality of 4 to 6.

4. Polyurethanes according to claim 1, **characterised in that** the monoalcohol B) has 8 to 18 carbon atoms.

5. Polyurethanes according to any of claims 1 to 4, **characterised in that** the diisocyanate C) is a (cyclo)aliphatic diisocyanate.

6. Polyurethanes according to any of claims 1 to 5, **characterised in that** the monoisocyanate D) has 8 to 14 carbon atoms.

7. Process for the production of the water-soluble or water-dispersible polyurethanes according to claim 1, **characterised in that** these are produced in a one-stage or multi-stage reaction, while maintaining an NCO/OH equivalent ratio of 0.5:1 to 1.2:1, from

A) a mixture of at least one polyether polyol a1) having a mean functionality of ≥ 3 and at least 1 urethane group-containing polyether polyol a2) having a mean functionality of ≥ 4,

B) at least one monoalcohol with 6 to 22 carbon atoms,

C) at least one (cyclo)aliphatic and/or aromatic diisocyanate,

D) optionally at least one monoisocyanate with 4 to 18 carbon atoms, and

E) optionally at least one polyisocyanate having a mean functionality of > 2.

**8.** Process for the production of polyurethanes according to claim 1, **characterised in that** the urethane group-containing polyether polyol a2) is produced by partial reaction of the polyether polyol a1) with a diisocyanate.

**9.** Process for the production of polyurethanes according to claim 8 **characterised in that** the urethane group-containing polyether polyol a2) is produced by partial reaction of the polyether polyol a1) with polyisocyanates having a mean functionality of ≥ 2.

**10.** Use of the polyurethanes according to claim 1, for adjusting the flow properties of aqueous paint systems, adhesives and other aqueous formulations.

**Revendications**

**1.** Polyuréthanes solubles ou dispersables dans l'eau, obtenus dans une réaction en un ou plusieurs stades en maintenant un rapport de 0,5 : 1 à 1,2 : 1 entre les équivalents de NCO et les équivalents d'OH, en produits de réaction de

A) un mélange d'au moins un polyéther-polyol a1) de fonctionnalité moyenne ≥ 3 et au moins un polyéther-polyol a2) à groupes uréthanes, de fonctionnalité moyenne ≥ 4,
B) au moins un monoalcool en $C_6$-$C_{22}$,
C) au moins un diisocyanate (cyclo)aliphatique et/ou aromatique,
D) le cas échéant au moins un monoisocyanate en $C_4$-$C_{18}$ et
E) le cas échéant au moins un polyisocyanate à fonctionnalité moyenne ≥ 2.

**2.** Polyuréthanes selon revendication 1, **caractérisés en ce que** le polyéther-polyol a1) a une fonctionnalité moyenne de 3.

**3.** Polyuréthanes selon revendication 1, **caractérisés en ce que** le polyéther-polyol a1) a une fonctionnalité moyenne de 4 à 6.

**4.** Polyuréthanes selon revendication 1, **caractérisés en ce que** le monoalcool B) est en $C_8$-$C_{18}$.

**5.** Polyuréthanes selon les revendications 1 à 5, **caractérisés en ce que** le diisocyanate C) est un diisocyanate (cyclo)aliphatique.

**6.** Polyuréthanes selon les revendications 1 à 6, **caractérisés en ce que** le monoisocyanate D) est en $C_8$-$C_{14}$.

**7.** Procédé pour la préparation des polyuréthanes solubles ou dispersables dans l'eau selon revendication 1, **caractérisé en ce qu'**on les prépare dans une réaction en un ou plusieurs stades en maintenant un rapport de 0,5 : 1 à 1,2 : 1 entre les équivalents de NCO et les équivalents d'OH, à partir de

A) un mélange d'au moins un polyéther-polyol a1) de fonctionnalité moyenne ≥ 3 et au moins un polyéther-polyol à groupes uréthanes a2), de fonctionnalité moyenne ≥ 4,
B) au moins un monoalcool en $C_6$-$C_{22}$,
C) au moins un diisocyanate (cyclo)aliphatique et/ou aromatique,
D) le cas échéant au moins un monoisocyanate en $C_4$-$C_{18}$, et
E) le cas échéant au moins un polyisocyanate à fonctionnalité moyenne > 2.

**8.** Procédé pour la préparation des polyuréthanes selon revendication 1, **caractérisé en ce que** le polyéther-polyol à groupes uréthanes a2) a été préparé par une réaction partielle entre le polyéther-polyol a1) et un diisocyanate.

**9.** Procédé pour la préparation de polyuréthanes selon revendication 8, **caractérisé en ce que** le polyéther-polyol à groupes uréthanes a2) est préparé par réaction partielle du polyéther-polyol a1) avec des polyisocyanates ayant

une fonctionnalité moyenne ≥ 2.

**10.** Utilisation des polyuréthanes selon la revendication 1 pour le réglage des propriétés de fluidité de compositions de revêtement aqueuses, de colles et autres compositions aqueuses.